# EUROPEAN PATENT SPECIFICATION

(11) **EP 3 225 763 B1**
(45) Date of publication and mention of the grant of the patent: **04.09.2019**
(21) Application number: 16204011.7
(22) Date of filing: 14.12.2016
(51) Int. Cl.: F24D 3/14, F24D 13/02

(54) **SUPPORT FOR HEATING ELEMENTS OF FLOORS AND OF RADIATING CLADDINGS**
TRÄGER FÜR HEIZELEMENTE VON FUSSBÖDEN UND VON ABSTRAHLENDEN VERKLEIDUNGEN
SUPPORT POUR ÉLÉMENTS DE CHAUFFAGE DE SOLS ET DE GAINES RAYONNANTES

(30) Priority: 01.04.2016 IT UA20162209
(43) Date of publication of application: 04.10.2017
(73) Proprietor: Progress Profiles SPA, 31011 Asolo (Treviso) (IT)
(72) Inventor: BORDIN, Dennis, 31011 Asolo TV (IT)
(74) Representative: Modiano, Micaela Nadia

(56) References cited:
- DE-U1-202006 013 453
- US-A1- 2012 031 026
- US-A1- 2014 069 039
- US-A1- 2016 047 131

## Description

This invention relates to a support for the heating elements of floors and of radiant claddings.

Nowadays are known and widespread support structures for the heating elements of floors and of radiating claddings, with hydraulic or electric type heating elements, generally comprising a base, often consisting of a panel or sheet or flexible thermoplastic membrane, from which an ordered array of bosses develop defining between them interspaces for laying heating pipes or electric cables.

The bosses have perimeter walls with anti-extraction template for the interlocking of a pipe or cable in the space between the two adjacent bosses.

The bosses, usually in a single body with base, have a cavity, open towards the outside in position for use, intended to be filled with adhesive material used for laying the overlying tiles or natural stones.

Such bosses with cavity, although widespread and appreciated, have an important limit due to the fact that the adhesive, once dried, mechanically adheres in the interspaces between the bosses thanks to the undercut portions defined by the anti-extraction template of the bosses' walls, whereas the gripping inside their cavities is milder because such cavities are concave and there are no parts where the dry adhesive can be laid taking an anti-extraction shape with mechanical gripping. Such support with bosses are for example disclosed in US20140069039 A1, US20160047131A1 or DE202006013453U1.

Another known limit of these panels and membranes is constituted by the fact that the base from which the bosses develop is generally a flat sheet, below which is trapped the steam which the heat developed from the radiant elements lets out from the underlying screed; the trapped steam can generate swelling and areas with risk of detaching for the panel with bosses and for the overlying covering.

The aim of the present invention is to provide a support for heating elements for floors and radiating claddings able to obviate the limits of the known panels and membranes.

Within this aim, an object of the invention is to provide a support optimal for mechanical anchoring with the material for laying cladding with respect to the known panels and membranes.

Another object of the invention is to provide a support which cooperates in preventing the formation of bulges between the support itself and the underlying screed, due to the evaporated and trapped steam.

A further object of the invention is to provide a support which can be used for the construction of floors and radiating claddings in the same way of the known support panels.

This aim, as well as these and other objects which will become better apparent hereinafter, are achieved by a support for the heating elements of floors and radiating claddings, according to claim 1.

Further characteristics and advantages of the invention will be clearer from the description of three forms of preferred, but not exclusive, embodiments of the support according to the invention, illustrated as an example but not limited to, in the attached drawings, in which:
- figure 1 shows a perspective view of a portion of a support according to the invention in its first embodiment;
- figure 2 represents a cross sectional view of a support according to the invention in figure 1;
- figure 2a illustrates a detail of figure 2;
- figure 3 is a bottom view of the portion of figure 1;
- figure 4 shows a perspective view of a portion of a support according to the invention in its second embodiment;
- figure 5 is a cross sectional view of a support as per figure 4;
- figure 5a is a detail of figure 5;
- figure 6 is a perspective view of a portion of a support according to the invention in its third embodiment;
- figure 7 is an additional perspective view of a portion of a support according to the invention in its third embodiment;
- figure 8 is a side view of the support portion of figure 6.

With reference to the above figures, a support according to the invention is generally indicated in its first embodiment, with the number 10.

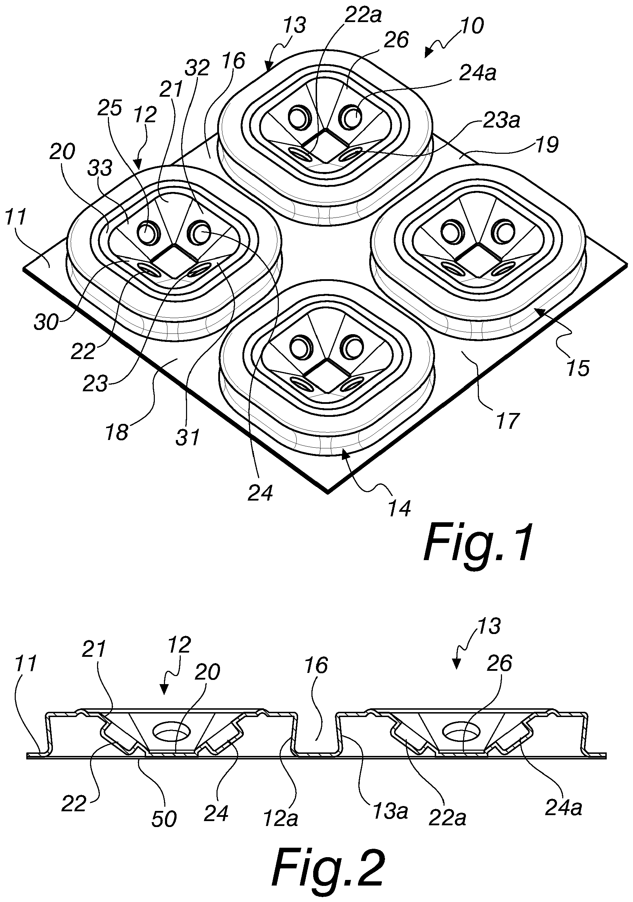

This support 10 for heating elements of floors and radiating claddings includes a base 11 from which bosses develop, for example 12, 13, 14, 15 in figure 1, for example, but not exclusively, arranged according to an ordered array, defining interspaces 16, 17, 18, 19 between them for laying pipes or electric heating cables, the latter not shown for simplicity.

The base 11 is flat.

The base 11 and the bosses 12, 13, 14 and 15 consist of a single plastic body and in particular of a polypropylene or polyethylene membrane (or of other thermoplastic material) which allows venting the steam from an underlying support surface on which it is laid and at the same time waterproof, that is it prevents the passage of water towards the same support surface. The base and bosses may also consist of a plastic panel.

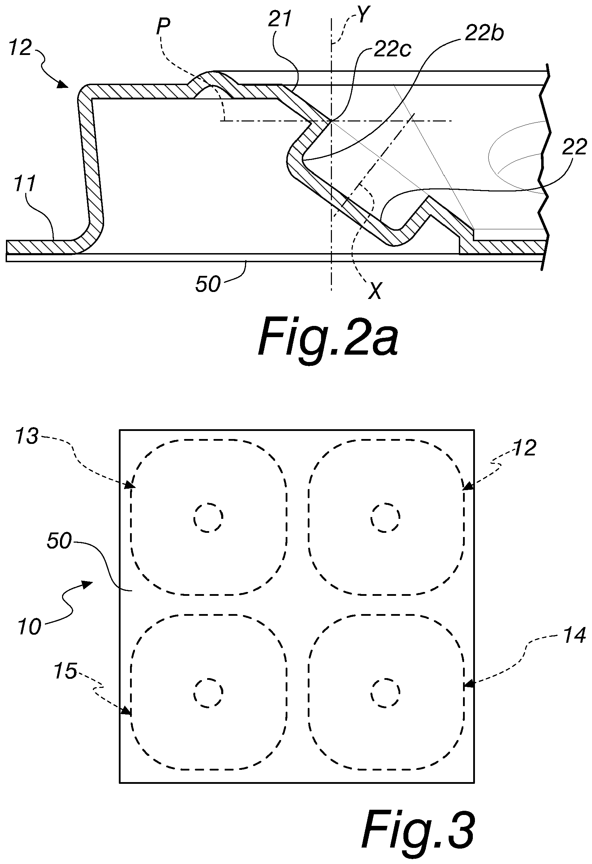

Preferably, the bosses have perimeter walls, for example 12a and 13a in figure 2, with anti-extraction template for the interlocking of a heating cable in the interspace 16 between two adjacent bosses, for example 12 and 13.

The peculiarity of the invention resides in the fact that each of said bosses 12, 13, 14 and 15 has a concave portion, for example a portion 20 for the first boss 12 and a portion 26 for the second boss 13, with the concavity facing the outside in a laying position.

Defined on the surface 21 of said concave portion 20 is at least one anchoring low-relief, for example four anchoring low-reliefs 22, 23, 24, 25.

Each of these anchoring low-reliefs 22, 23, 24 and 25 defines in turn an extraction-preventing undercut, for example 22b detailed in figure 2a, adapted to be filled with material for laying an element of a cladding, e.g a tile, not shown and to be understood known, adhesive material which obviously fills the same concave portion 20 and 26.

The extraction-preventing undercut 22b is to be understood such with respect to a plane P parallel to the base 11 and passing through the upper point 22c of the outer edge of the corresponding low-relief 22.

The extraction-preventing undercut 22b prevents the extraction of the filling material, which fills the concave portion 20, and also fills the low-relief 22, in a Y direction orthogonal to plane P, thus improving the anchoring of the same material, and of the overlying covering, to the support 10.

The low-reliefs of the second boss 13 are shown, as an example, with 22a, 23a and 24a.

In the first embodiment of figures 1 and 2, each anchoring low-relief 22, 23, 24, 25 is cylindrical with the main X axis orthogonal to the surface 21 of the corresponding concave portion 20, with rounded inner corners to help the extraction of the equipment with which the bosses are moulded on the base.

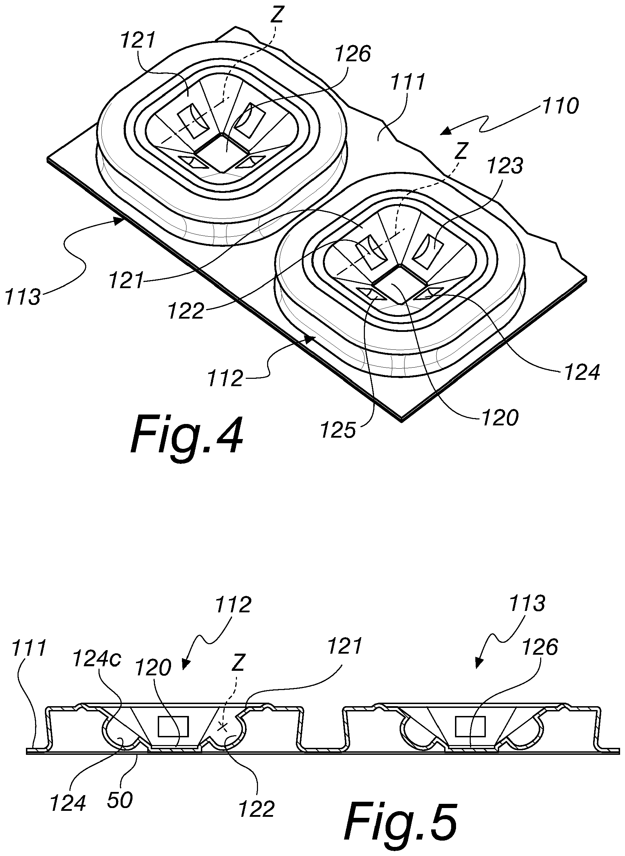

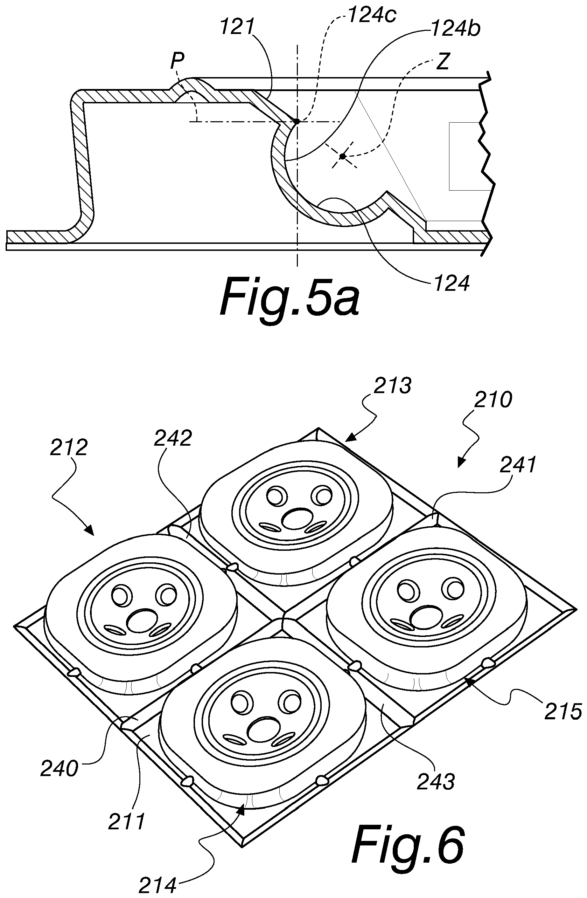

In the second embodiment, indicated with 110 and represented in figures 4 and 5, for each boss 112 and 113 each anchoring low-relief 122, 123, 124, 125 has a semicylindrical template, with main axis Z parallel to the surface 121 of the concave portion 120.

Each of these anchoring low-reliefs 122, 123, 124 and 125 defines in turn an extraction-preventing undercut, for example 124b detailed in figure 5a, to be filled with material for laying an element of a cladding, e.g a tile, not shown and to be understood known, adhesive material which obviously fills the same concave portion 120 and 126.

The extraction-preventing undercut 124b is to be understood such with respect to a plane P parallel to a base 111 and passing through the upper outer edge 124c of the corresponding low-relief 124.

This extraction-preventing undercut 124b prevents the extraction of the filling material, which fills the concave portion 120, and also fills the low-relief 124, in a Y direction orthogonal to plane P.

These anchoring low-reliefs can also have other shapes, for example with a semispherical, triangular, square, rhomboidal, oval section and other shapes, templates and profiles, depending on the technical needs and requirements.

In these embodiments, not restrictive of the invention, each concavity has a frustum-shaped surface 21, with walls 30, 31, 32, 33 connected by curved sections.

The support 10 includes at least one low-relief 22, 23, 24, 25 for each of the walls 30, 31, 32, 33, for example one low-relief for each wall, as in figures 1 and 4.

In a third embodiment of the invention, clearly visible in figures from 6 to 8 and indicated therein with number 210, in correspondence of said interspaces, on said base 211, channels 240, 241, 242, 243 are provided to convey the steam towards the collection chambers 244, 245 defined between the body of said bosses 212, 213, 214, 215 and an underlying surface, such as the screed, an adhesive layer or another layer fixed to the base 211 of the same support 210.

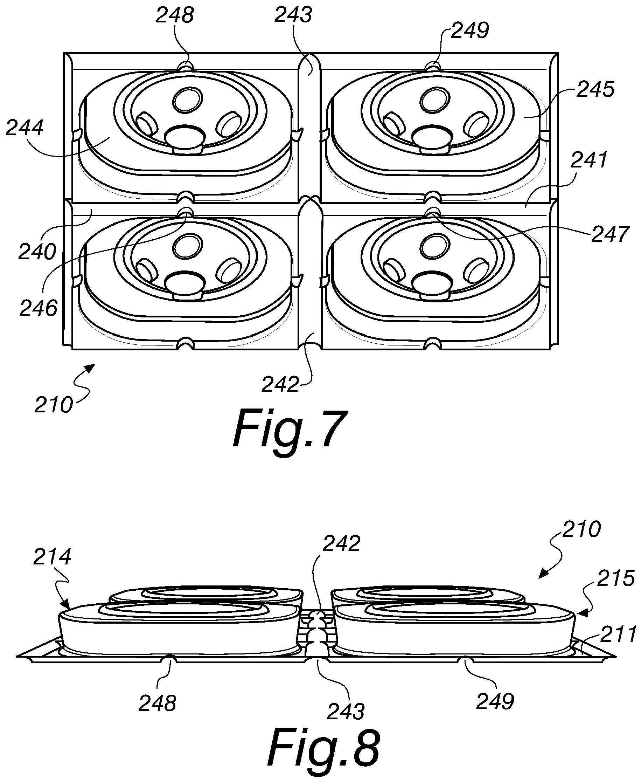

These channels 240, 241, 242, 243 are open towards the surface to which the support 210 is fixed and communicate with the collection chambers 244 and 245 through corresponding passages, such as 246, 247, 248 and 249 in figures 7 and 8.

Thanks to the bosses having flat walls, or thin, and the chambers 244 and 245 defined inside each boss, and to the conveying channels, it is possible to collect at least part of the steam possibly coming out from the screed due to the heat given off by the heating elements laid on the support 210, and avoid that this steam determines the formation of bulging areas and the detachment of the same support 210 from the underlying screed or other support surface and fixing.

The support according to the invention, in its three embodiments described above 10, 110 and 210, may also include a thermal insulation layer 50 located under the base 11, 111, 211 and developed to involve the entire base 11, 111, 211 including the areas in which said bosses 12, 13, 14, 15, 112, 113, 212, 213, 214, 215 develop.

Said thermal insulation layer 50 is made of fabric or cork or is constituted by a metal sheet or other similar and equivalent materials.

Basically, it has been ascertained how the inventions achieves the intended aim and objects.

In particular, with the invention we have developed a support which is optimal for mechanical anchoring with the adhesive material for laying the coverings with respect to the known panels.

In addition, with the invention a support has been provided which cooperates in preventing the formation of bulges between the support and the underlying screed, due to the evaporated and trapped steam.

Furthermore, with the invention a support has been developed which is simple and intuitive to use.

In addition, with the invention a support has been developed that can be used for the realisation of radiant floors in the same way as the known support structures.

The invention, thus conceived, is susceptible of various changes and variations, all falling within the scope of the appended claims; moreover, all details can be replaced with others technically equivalent.

Basically, the used components and materials, as long as compatible with the specific use, as well as the contingent shapes and dimensions, can be any according to the requirements and state of the art.

The disclosures in Italian Patent Application No. 102016000033439 (UA2016A002209) from which this application claims priority are incorporated herein by reference.

Where the features and techniques mentioned in any claim are followed by benchmarks, these marks are affixed with the sole purpose of increasing the intelligibility of the claims and such benchmarks have no limiting effect on the interpretation of each element identified by way of example by such benchmarks.

## Claims

1. A support (10) for heating elements of floors and of radiating claddings, comprising a base (11; 211) from which bosses (12, 13, 14, 15; 212, 213, 214, 215) protrude which form between them interspaces (16, 17, 18, 19) for laying pipes or electric heating cables, each one of said bosses having a concave portion (20) comprising a frustum-shaped surface (21), with the concavity directed outward in a laid configuration, on the surface (21) of said concave portion (20) there being at least one anchoring low-relief (22, 23, 24, 25)
**characterized in that**
said anchoring low-relief (22, 23, 24, 25) forms an extraction-preventing undercut (22b) adapted to be filled with material for laying an element of a cladding or a floor, for preventing an extraction of said material, said undercut (22b) being an undercut with respect to a plane (P) parallel to said base (11,211) and passing through an upper point (22c) of an outer edge of the corresponding low-relief (22).

2. The support according to claim 1, **characterized in that** said anchoring low-relief (22, 23, 24, 25) is cylindrical with a main axis (X) that is perpendicular to the surface (21) of the corresponding concave portion (20).

3. The support according to claim 1, **characterized in that** said anchoring low-relief (122, 123, 124, 125) has a semicylindrical contour with a main axis (Z), said concave portion (120) comprising lateral inclined surfaces (121), said main axis (Z) being parallel to the corresponding lateral surface (121) of the concave portion (120).

4. The support according to one or more of the preceding claims, **characterized in that** said concavity has a frustum-shaped surface (21) with walls (30, 31, 32, 33) joined by curved portions.

5. The support according to the preceding claim, **characterized in that** it comprises at least one low-relief (22, 23, 24, 25) for each one of said walls (30, 31, 32, 33).

6. The support according to one or more of the preceding claims, **characterized in that** at said interspaces, on said base (211), there are channels (240, 241, 242, 243) for conveying steam toward collection chambers (244, 245) formed between the body of said bosses (212, 213, 214, 215) and an underlying surface.

7. The support according to one or more of the preceding claims, **characterized in that** it comprises a thermal insulation layer (50) arranged below the base (11) and extended so as to affect all of said base (11), including the regions where said bosses (12, 13, 14, 15) protrude.

8. The support according to claim 7, **characterized in that** said thermal insulation layer (50) is made of fabric, or cork, or is constituted by a sheet with metallic material.

9. The support according to one or more of the preceding claims, **characterized in that** the base (11) and the bosses (12, 13, 14, 15) are constituted by a single body made of plastic material, and in particularly by a membrane made of polypropylene or polyethylene or other thermoplastic material.

10. The support according to one or more of claims 1 to 8, **characterized in that** said base and said bosses are constituted by a panel made of plastic material.

## Patentansprüche

1. Ein Träger (10) für Heizelemente von Fußböden und von abstrahlenden Verkleidungen, der eine Basis (11; 211) umfasst, aus der Buckel (12, 13, 14, 15; 212, 213, 214, 215) herausragen, die zwischen sich Zwischenräume (16, 17, 18, 19) zum Verlegen von Rohren oder elektrischen Heizkabeln bilden; wobei jeder der Buckel einen konkaven Abschnitt (20) hat, der eine kegelstumpfförmige Oberfläche (21) umfasst, wobei die Konkavität in einer liegenden Konfiguration nach außen weist, wobei sich auf der Oberfläche (21) des konkaven Abschnitts (20) mindestens ein Verankerungs-Flachrelief (22, 23, 24, 25) befindet;
**dadurch gekennzeichnet, dass**
das Verankerungs-Flachrelief (22, 23, 24, 25) eine die Extraktion verhindernde Unterschneidung (22b) bildet, ausgebildet, um mit Material zum Verlegen eines Elements einer Verkleidung oder eines Fußbodens gefüllt zu werden, um eine Extraktion des Materials zu verhindern; wobei die Unterschneidung (22b) eine Unterschneidung mit Bezug auf eine Ebene (P) ist, die parallel zu der Basis (11, 211) ist und durch einen oberen Punkt (22c) einer Außenkante des entsprechenden Flachreliefs (22) verläuft.

2. Der Träger gemäß Anspruch 1, **dadurch gekennzeichnet, dass** das Verankerungs-Flachrelief (22, 23, 24, 25) zylindrisch ist, mit einer Hauptachse (X), die senkrecht zur Oberfläche (21) des entsprechenden konkaven Abschnitts (20) ist.

3. Der Träger gemäß Anspruch 1, **dadurch gekennzeichnet, dass** das Verankerungs-Flachrelief (122, 123, 124, 125) eine halbzylindrische Kontur mit einer Hauptachse (Z) hat, wobei der konkave Abschnitt (120) schräge Seitenflächen (121) umfasst, wobei die Hauptachse (Z) parallel zur entsprechenden Seitenfläche (121) des konkaven Abschnitts (120) ist.

4. Der Träger gemäß einem oder mehreren der obigen Ansprüche, **dadurch gekennzeichnet, dass** die Konkavität eine kegelstumpfförmige Oberfläche (21) mit Wänden (30, 31, 32, 33) hat, die durch gekrümmte Abschnitte verbunden sind.

5. Der Träger gemäß dem obigen Anspruch, **dadurch gekennzeichnet, dass** er mindestens ein Flachrelief (22, 23, 24, 25) für jede der Wände (30, 31, 32, 33) umfasst.

6. Der Träger gemäß einem oder mehreren der obigen Ansprüche, **dadurch gekennzeichnet, dass** sich an den Zwischenräumen, auf der Basis (211), Kanäle (240, 241, 242, 243) zum Leiten von Dampf zu Sammelräumen (244, 245) befinden, die zwischen dem Körper der Buckel (212, 213, 214, 215) und einer darunter liegenden Oberfläche geformt sind.

7. Der Träger gemäß einem oder mehreren der obigen Ansprüche, **dadurch gekennzeichnet, dass** er eine unterhalb der Basis (11) angeordnete Wärmeisolierschicht (50) umfasst, die sich so erstreckt, dass sie die gesamte Basis (11) beeinflusst, einschließlich der Bereiche, wo die Buckel (12, 13, 14, 15) herausragen.

8. Der Träger gemäß Anspruch 7, **dadurch gekennzeichnet, dass** die Wärmeisolierschicht (50) aus Textilien oder Kork hergestellt ist oder aus einer Schicht mit Metallmaterial besteht.

9. Der Träger gemäß einem oder mehreren der obigen Ansprüche, **dadurch gekennzeichnet, dass** die Basis (11) und die Buckel (12, 13, 14, 15) aus einem einzigen Körper bestehen, der aus Kunststoffmaterial hergestellt ist, und im Speziellen aus einer Membran aus Polypropylen oder Polyethylen oder anderem thermoplastischem Material.

10. Der Träger gemäß einem oder mehreren der Ansprüche 1 bis 8, **dadurch gekennzeichnet, dass** die Basis und die Buckel aus einer Platte bestehen, die aus Kunststoffmaterial hergestellt ist.

## Revendications

1. Support (10) pour des éléments chauffants de planchers et de revêtements rayonnants, comportant une base (11 ; 211) à partir de laquelle font saillie des protubérances (12, 13, 14, 15 ; 212, 213, 214, 215) qui forment entre elles des espacements (16, 17, 18, 19) pour poser des tuyaux ou des câbles de chauffage électrique, chacune desdites protubérances ayant une partie concave (20) comportant une surface tronconique (21), avec la concavité dirigée vers l'extérieur dans une configuration posée, au moins un bas-relief d'ancrage (22, 23, 24, 25) étant agencé sur la surface (21) de ladite partie concave (20)
**caractérisé en ce que** ledit bas-relief d'ancrage (22, 23, 24, 25) forme une contre-dépouille de prévention d'extraction (22b) adaptée à être remplie d'un matériau pour poser un élément d'un revêtement ou d'un plancher, pour empêcher une extraction dudit matériau, ladite contre-dépouille (22b) étant une contre-dépouille par rapport à un plan (P) parallèle à ladite base (11, 211) et passant à travers un point supérieur (22c) d'un bord extérieur du bas-relief (22) correspondant.

2. Support selon la revendication 1, **caractérisé en ce que** ledit bas-relief d'ancrage (22, 23, 24, 25) est cylindrique avec un axe principal (X) qui est perpendiculaire à la surface (21) de la partie concave (20) correspondante.

3. Support selon la revendication 1, **caractérisé en ce que** ledit bas-relief d'ancrage (122, 123, 124, 125) a un contour semi cylindrique avec un axe principal (Z), ladite partie concave (120) comportant des surfaces latérales inclinées (121), ledit axe principal (Z) étant parallèle à la surface latérale (121) correspondante de la partie concave (120).

4. Support selon une ou plusieurs des revendications précédentes, **caractérisé en ce que** ladite concavité a une surface tronconique (21) avec des parois (30, 31, 32, 33) reliées par des parties courbes.

5. Support selon la revendication précédente, **caractérisé en ce qu'**il comporte au moins un bas-relief (22, 23, 24, 25) pour chacune desdites parois (30, 31, 32, 33) .

6. Support selon une ou plusieurs des revendications précédentes, **caractérisé en ce qu'**au niveau desdits espacements, sur ladite base (211), il y a des canaux (240, 241, 242, 243) pour acheminer de la vapeur vers des chambres de collecte (244, 245) formées entre le corps desdites protubérances (212, 213, 214, 215) et une surface sous-jacente.

7. Support selon une ou plusieurs des revendications précédentes, **caractérisé en ce qu'**il comporte une couche d'isolation thermique (50) agencée sous la base (11) et s'étendant de manière à affecter la totalité de ladite base (11), y compris les zones où lesdites protubérances (12, 13, 14, 15) font saillie.

8. Support selon la revendication 7, **caractérisé en ce que** ladite couche d'isolation thermique (50) est en tissu ou en liège, ou est constituée d'une feuille avec un matériau métallique.

9. Support selon une ou plusieurs des revendications précédentes, **caractérisé en ce que** la base (11) et les protubérances (12, 13, 14, 15) sont constituées d'un seul corps en matière plastique, et en particulier d'une membrane en polypropylène ou en polyéthylène ou une autre matière thermoplastique.

10. Support selon une ou plusieurs des revendications 1 à 8, **caractérisé en ce que** ladite base et lesdites protubérances sont constituées d'un panneau en matière plastique.
